# EUROPÄISCHE PATENTSCHRIFT

(11) **EP 2 886 460 B1**
(45) Veröffentlichungstag und Bekanntmachung des Hinweises auf die Patenterteilung: **30.09.2020**
(21) Anmeldenummer: 14197620.9
(22) Anmeldetag: 12.12.2014
(51) Int. Cl.: B64D 11/06

(54) **Tischerweiterung für einen Flugzeugtisch**
Desk extension for an aeroplane desk
Rallonge de tablette pour une tablette d'avion

(30) Priorität: 18.12.2013 DE 102013021077
(43) Veröffentlichungstag der Anmeldung: 24.06.2015
(73) Patentinhaber: Lisa Dräxlmaier GmbH, 84137 Vilsbiburg (DE)
(72) Erfinder: Anzeneder, Florian, 84137 Vilsbiburg (DE); Schlarb, Klaus, 84155 Bodenkirchen (DE)

(56) Entgegenhaltungen:
- WO-A1-2013/142821
- DE-A1- 2 600 753
- DE-C1- 4 402 561
- FR-A- 920 678
- FR-A- 1 441 399
- FR-A- 1 576 456

## Beschreibung

### Technisches Gebiet

Die vorliegende Erfindung betrifft eine Tischerweiterung für einen Tisch mit Unterbau, bei der eine Hauptablage durch eine bewegliche, beim Unterbau abgestützte Nebenablage ergänzt wird. Das Haupteinsatzgebiet liegt im VIP-Bereich von Luftfahrzeugen, bei denen massive Tischkonstruktionen außerhalb von Start- und Landeflug erweitert werden sollen.

### Stand der Technik

Tischkonstruktionen sind in Luftfahrzeugen üblich, um eine Ablage zu bieten, die vom Fluggast genutzt werden kann. In Luftfahrzeugen steht dem Fluggast ein oft begrenzter Raum zur Verfügung, in dem er trotzdem in der Lage sein soll, zu arbeiten und Mahlzeiten zu sich zu nehmen. Während Start und Landung ist weiterhin zu gewährleisten, dass ausreichend Zwischenraum zwischen Fluggast und Mobiliar besteht, um Verletzungen vorzubeugen wenn heftige Bewegungen das Flugzeug erschüttern. Tischkonstruktionen werden auch genutzt, um Ablageflächen für Betten u.ä. bereitzustellen, die unter Nutzung von Matratzen Liegemöglichkeiten mit allem Komfort bereithalten.

Als Tischkonstruktionen sind Klappkonstruktionen üblich, die während Start und Landung eine Ablage komplett in den Flugzeugsitz oder in die Armablage zurückführen lassen. Auch im VIP Bereich von Luftfahrzeugen, in denen fest installierte Hauptablagen vorgesehen sind, werden Tischerweiterungen über Klapplösungen vorgenommen, bei denen Nebenablagen über ein Doppelscharnier nach oben geklappt und auf die Hauptablage abgelegt werden.

Die bisherigen Lösungen für Tischerweiterungen im VIP-Bereich sind bezüglich Bewegungsführung und Endablage unbefriedigend.

Aus FR 1 576 456 A, DE 26 00 753 A1, DE 295 17 822 U1, US 315 949 A, FR 1 441 399 A3 und DE 44 02 561 C1 sind Tischkonstruktionen mit herausfahrbaren Nebenablagen bekannt. Jedoch genügen diese Lösungen nicht den Anforderungen von Fahrzeugen und wurden so trotz langjähriger Verfügbarkeit nicht in Fahrzeugen verwendet.

### Beschreibung der Erfindung

Aufgabe der Erfindung ist es, eine Tischerweiterung bereitzustellen, die die vorgenannten Nachteile vermeidet. Die Aufgabe wird durch die Merkmale des Tisches nach Anspruch 1 gelöst. Vorteilhafte Weiterbildungen der Erfindung sind in den Unteransprüchen angegeben. Als Tische und Tischerweiterungen sind Konstruktionen anzusehen, die Ablagemöglichkeiten für Mahlzeiten, aber auch zum Arbeiten oder Schlafen bereitstellen.

Der erfindungsgemäße Tisch hat eine Hauptablage und
eine bewegliche Nebenablage mit mindestens einem Schenkel zum Abstützen der Nebenablage, der zwei Führungsstifte umfasst. Weiterhin umfasst der Tisch eine Kulissenführung, die an einem Unterbau des Tisches befestigt ist und über zwei Führungsnuten verfügt, die mit den Führungsstiften zur Abstützung der Nebenablage zusammenwirken. Die Kulissenführung kann in den Unterbau integriert sein oder sich in seiner Nähe befinden. Die Kulissenführung weist dabei für die Anfangs- und Endposition getrennte Arretierungsvorrichtungen auf, in denen beispielsweise mittels eines Bolzens oder Schnappverschlusses der Schenkel der Nebenablage fixiert wird. Eine besondere Erhöhung der Bedienfreundlichkeit ergibt sich, da ein mittels eines Bedienelements betätigbarer Bowdenzug entlang des Schenkels geführt wird, der auf einen Schnappverschluss einwirkt. Hier kann bequem von einer Seite des Tisches die Arretierung gelöst werden, indem sich der Schnappverschluss bei Betätigung des Bowdenzugs aus einer Arretierungsposition löst und die Nebenablage bewegbar wird.

Erfindungsgemäß kann insbesondere bei Flugzeugnutzungen die Nebenablage unter der Hauptablage im Start- und Landeflug verstaut und eine gesicherte Bewegungsführung in allen Positionen erreicht werden. Vorteilhafterweise werden die Führungsstifte durch Führungsrollen gebildet, die über einen Stift mit dem Schenkel verbunden sind und in den Führungsnuten entlangfahren können. Zur Verringerung der Reibung können die Führungsrollen durch gummierte Stahlrollen gebildet werden.

Die der Nebenablage naheliegende Führungsnut weist insbesondere an der der Nebenablage zugewandten Seite eine von der Nebenablage abweisende Krümmung auf. Damit wird eine einrastende und verriegelbare Positionierung der Nebenablage erzielt, wie sie insbesondere für Tische in Luftfahrzeugen vorteilhaft ist.

Nach einer Weiterbildung der Erfindung sind die Führungsnuten der Kulissenführung an einer der Nebenablage abgewandten Seite im Wesentlichen waagerecht angeordnet und parallel. Somit kann die Nebenablage in der Startposition parallel zur Hauptablage geführt und arretiert werden.

Die obengenannte Krümmung der Führungsnut vollführt einen Halbkreis, der von der Nebenablage wegführt. Die durch das Krümmungsende definierte Endposition ist damit nicht der höchste und am weitesten zur Außenkante der Hauptablage zeigende Punkt der Führungsnut. Dadurch wird ein Bewegungsprofil unterstützt, das die Nebenablage erst von der Hauptablage trennt, bevor die Bewegung zur Verstauung unter der Hauptablage einsetzt. Weiterhin kann der weitere Verlauf der Führungsnuten einer Kulissenführung so gestaltet sein, dass beide Führungsnuten nicht parallel geführt sind, insbesondere im Bereich der der Nebenablage zugewandten Seite. Damit wird eine Kippbewegung unterstützt, die für den Nutzer ergonomisch und intuitiv nachvollziehbar ist und an ein Abklappen erinnert, wobei die Bewegung durch die zwei Führungsnuten in jeder Position unterstützt und auch mit geringen Kräften ausführbar ist. Vorteilhafterweise hat die mit der Krümmung versehene Führungsnut in einem oberen Teil einen größeren Neigungswinkel als die andere Führungsnut der gleichen Kulissenführung.

Entsprechend einer weiteren vorteilhaften Ausgestaltung der Erfindung wird eine Parallellage der Nebenablage zur Hauptablage in Anfangs- und Endposition dadurch erreicht, dass die Führungsnuten einer Kulissenführung zu Beginn und Ende der Bewegung den gleichen Abstand zur Hauptablage haben und zueinander einen Höhenabstand von etwas mehr als einer Dicke der Nebenablage aufweisen. Vorzugsweise soll die Nebenablage im verstauten Zustand nahezu an einer Unterseite der Hauptablage anliegen, ohne jedoch daran zu reiben.

Um Materialeinsatz und Baugröße der Kulissenführung zu minimieren, wird vorteilhafterweise die Nebenablage in Startposition so positioniert, dass sich eine Außenseite der Nebenablage in der Nähe einer Außenseite der Hauptablage befindet. Dabei sind zwei Varianten besonders hervorzuheben, bei einem bündigen Anliegen wird die Länge der Führungsnuten und damit der Kulissenführung minimiert, bei einem leichten Versatz der Nebenablage zum Inneren der Hauptablage wirkt die Außenkante dafür weniger wuchtig und ergibt unter Umständen einen harmonischeren Gesamteindruck.

Eine höhere Stabilität der Abstützung wird dadurch erreicht, dass pro Nebenablage zwei zueinander parallele Schenkel vorgesehen sind, die über jeweils eine Kulissenführung geführt werden. Entsprechend der Breite und dem Gewicht der Nebenablage wird die Anzahl notwendiger Schenkel eingestellt. Vorteilhafterweise werden im Falle von zwei Schenkeln, die Schenkel der Nebenablage dabei so positioniert, dass der Abstand von der nächstliegenden Seitenkante der Nebenablage jeweils etwa ein Viertel der Breite der Nebenablage beträgt. Damit werden die Kräfte optimal in den Unterbau des Tisches abgeleitet.

Für eine die Reibkräfte zwischen Haupt- und Nebenablage während der Bewegung minimierende Ausführung ist vorteilhafterweise die Länge der Führungsnuten größer als die Tiefe der Nebenablage, die sich damit von der Hauptablage ablösen kann.

Einen höheren Komfort für die Tischerweiterung wird durch eine Ergänzung mit einer Antriebseinrichtung zum Verschieben der Nebenablage entlang des durch die Kulissenführung vorgegebenen Bewegungsprofils erreicht. Die Antriebseinrichtung kann dabei elektrisch betreibbar sein.

Der Tisch soll vorteilhafterweise stabil, optisch ansprechend, aber auch möglichst leicht sein, um Luftfahrtsanforderungen zu entsprechen. Dazu besteht die Kulissenführung aus Aluminium oder einer Titanlegierung und die Hauptablage und die Nebenablage aus Holz, Stein, Komposite-Material oder einem Material mit belederter Oberfläche.

Besteht das Erfordernis, dass der Tisch mehrfach erweiterbar ist, wird er entsprechend einer vorteilhaften Ausgestaltung der Erfindung mit einer zweiten Nebenablage versehen, die an einer weiteren Seite der Hauptablage angeordnet ist. Eine platz- und materialsparende Lösung ist dabei, dass zumindest ein Schenkelpaar beider Nebenablagen eine gemeinsame Kulissenführung nutzt. Die Kulissenführung hat jedoch auf gegenüberliegenden Seiten separate Führungsnutpaare, die mit dem jeweiligen Schenkel in Wechselwirkung treten.

Um nichteckige Kanten der Hauptablage im Verfahrweg der Nebenablage berücksichtigen zu können, ist die Krümmung der Kulissenführung vorteilhafterweise gespiegelt an die untere Kante der der Nebenablage benachbarten Seite der Hauptablage angepasst. Eine abgerundete Kante führt so zu einem entsprechend abfallenden Endverlauf der Krümmung.

Für eine Erhöhung der Stabilität des Tisches werden nach vorteilhaften Weiterbildungen der Erfindung pro Kulissenführung beidseitig zwei Schenkel geführt oder pro Schenkel beidseitig zwei Kulissenführungen zur Führung des Schenkels vorgesehen. Stabilitätsfördernd ist ferner, wenn Schenkel und Kulissenführung aus Metall, insbesondere Aluminium oder einer Titanlegierung, gefertigt sind.

Vorteilhafterweise wird die Nebenablage in der Arretierungsposition gehalten, indem der Bowdenzug durch eine Feder, insbesondere eine Spiralfeder, vorgespannt ist. Der Arretierungsmechanismus kann auch auf Tische mit zwei Schenkeln angewendet werden, wobei das mittig zwischen den Schenkeln angeordnete Bedienelement zwei Bowdenzüge betätigt werden, die jeweils einen Schnappverschluss bedienen.

Die Arretierung erfolgt nach vorteilhaften Ausgestaltungen der Erfindung indem zwei eine Anfangs- und eine Endposition bezeichnende Ausnehmungen in der Kulissenführung bzw. dem Schenkel vorgesehen sind, in die der Schnappverschluss verrastbar ist. Damit wird der Bowdenzug bei Bewegung der Nebenablage mitgeführt und kein Längenausgleich wird erforderlich. Falls im Schnappverschluss ein Langloch vorgesehen ist, das in einem spitzen Winkel, vorzugsweise zwischen 15° und 60°, insbesondere etwa 45°, von einer Bewegungsachse der Nebenablage angeordnet ist, wird der Schnappverschluss automatisch in der Arretierungsposition gehalten, z.B. durch eine Federspannung auf einen im Langloch geführten Stift. Wenn weiterhin der Schnappverschluss an der vom Bowdenzug abweisenden Seite angeschrägt ist, wird er selbsttätig in die Ausnehmung einrasten.

Eine weitere Stabilisierung erfährt der Tisch (insbesondere bei langen Schenkelwegen ist eine Abstützung der Nebenablage in ausgefahrener Position wichtig), wenn eine Abstützung der Schenkel an zwei Stellen erfolgt. Zum Einen durch eine Auswölbung im Schenkel, vorzugsweise an dem von der Nebenablage entfernten Ende, die von unten gegen die Hauptablage drückt, und zum Anderen eine Ausnehmung im Schenkel, die sich auf einen fest mit der Hauptablage verbundenen Vorsprung abstützt. Beide Abstützpunkte sind entlang des Schenkels deutlich voneinander entfernt.

Darüber hinaus sind weitere Vorteile und Merkmale der vorliegenden Erfindung aus der folgenden Beschreibung bevorzugter Ausführungsformen ersichtlich. Die dort beschriebenen Merkmale können alleinstehend oder in Kombination mit einem oder mehreren der oben erwähnten Merkmale umgesetzt werden, insofern sich die Merkmale nicht widersprechen. Die folgende Beschreibung der bevorzugten Ausführungsformen erfolgt dabei unter Bezugnahme auf die begleitenden Zeichnungen.

### Kurze Figurenbeschreibung

- Figur 1: zeigt in Seitenansicht einen Tisch mit Nebenablage in Endposition,
- Figuren 2 bis 6: zeigen in Seitenansicht die Nebenablage im Verlauf der Bewegung,
- Figur 7: zeigt in Seitenansicht einen Tisch mit Nebenablage in Startposition,
- Figur 8: zeigt in Draufsicht einen Tisch mit zwei Nebenablagen in Endposition,
- Figur 9: zeigt in Seitenansicht einen Tisch mit Nebenablage und Antriebseinrichtung,
- Figur 10: zeigt einen Tisch mit Nebenablage nach dem Stand der Technik,
- Figur 11: zeigt die Krümmung der Führungsnut,
- Figuren 12 bis 16: zeigen ein zweites Ausführungsbeispiel mit Verriegelung durch einen Bowdenzug,
- Figuren 17 und 18: zeigen stabilitätsfördernde Varianten mit Dopplung von Schenkel oder Kulissenführung.

### Ausführungsbeispiele

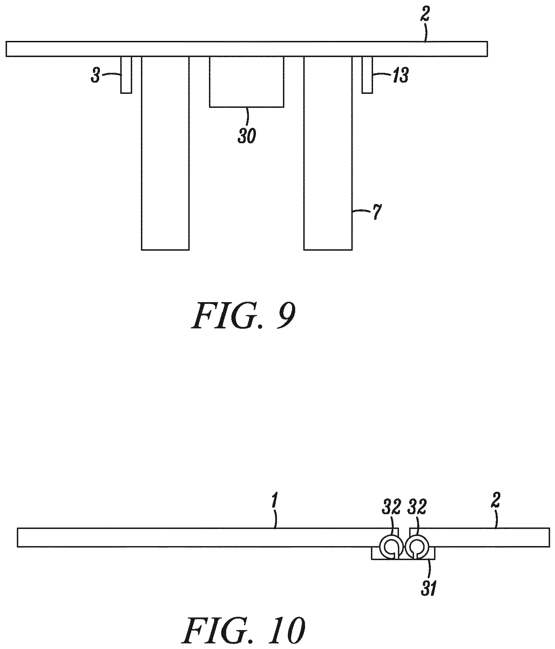

Im Stand der Technik sind Tischkonstruktionen für Flugzeuge entsprechend Figur 10 bekannt, die eine Hauptablage 1 und eine Nebenablage 2 umfassen. Damit die Nebenablage 2 beweglich ist und geklappt werden kann, ist ein dreiteiliges Scharnierstück 31 mit zwei Scharnieren 32 vorgesehen, die gewährleisten, dass die Nebenablage 2 auf der Hauptablage 1 abgelegt werden kann.

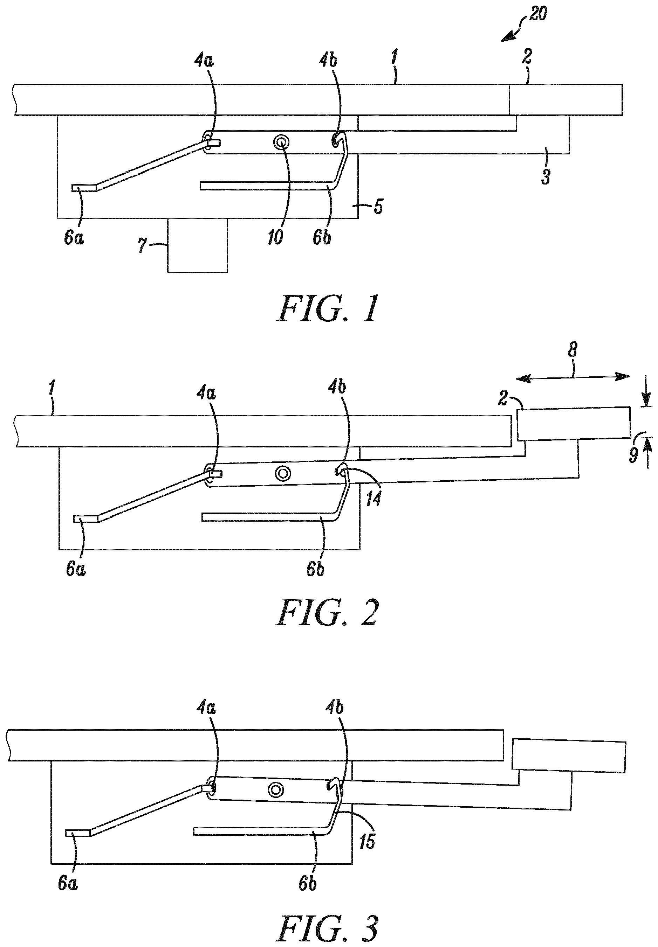

Anhand der Figuren 1 bis 7 wird der Bewegungsablauf geschildert, mit dem bei einem erfindungsgemäßen Tisch eine Nebenablage 2, die als Tischerweiterung für eine Hauptablage 1 dient, verstaut wird.

Unter der Hauptablage 1 ist eine Kulissenführung 5 angebracht, die zwei Führungsnute 6a, 6b umfasst, in denen sich zwei Führungsrollen 4a, 4b geführt bewegen können. Die Führungsrollen 4a, 4b sind Teil eines Schenkels 3, der mit der Nebenablage 2 verbunden ist und diese Nebenablage 2 an der Kulissenführung 5 abstützt. Damit ergibt sich ein stabiles Konstrukt, in dem sich die Nebenablage 2 geführt bewegen lässt und in jeder Zwischenposition zwischen den zwei Extremlagen Halt findet. Damit werden auch bei großen und schweren Nebenablagen 2 die Kräfte sicher abgeführt. Hauptablage 1 und Kulissenführung 5 führen die wirkenden Kräfte weiter über einen Unterbau 7 an das Flugzeug ab.

Figur 1 zeigt den Tisch in Endposition 20, das heißt die Nebenablage 2 liegt an der Hauptablage 1 bündig an und bildet so eine vergrößerte Tischfläche. In dieser Position ist der Schenkel 3 mit einer Arretierungsvorrichtung 10 in der Kulissenführung fixierbar, indem ein Bolzen o.ä. durch eine Öffnung des Schenkels 3 in eine Aufnahme der Kulissenführung 5 geführt wird und ggf. gegen ein Verrutschen gesichert wird. Die Führungsstifte 4a und 4b aus gummierten Stahlrollen ruhen in der jeweiligen Führungsnut 6a, 6b und lassen sich innerhalb der jeweiligen Führungsnut 6a, 6b verfahren, wobei sich der der Nebenablage 2 naheliegende Führungsstift 4b am Ende einer Krümmung der zugehörigen Führungsnut 6b befindet, währenddessen der andere Führungsstift 4a einige Millimeter vom Ende der zugehörigen Führungsnut 6a beabstandet positioniert ist.

Nach Figur 2 wird bei der Bewegung der Nebenablage 2 diese zuerst von der Hauptablage 1 weggezogen und leicht angehoben. Dies wird durch eine Krümmung 14 unterstützt, deren Ende von der Nebenablage 2 abweist und die nun in einer auswärts gerichteten Bewegung durchlaufen wird. Der Führungsstift 4a der anderen Führungsnut 6a läuft währenddessen auf das in etwa parallel zur Hauptablage geführte Ende dieser Führungsnut 6a zu. Die Nebenablage 2 mit der Tiefe 8 und der Dicke 9, letzte entspricht der Dicke der Hauptablage 1, vollführt dabei eine Kippbewegung und löst sich von der Hauptablage 1.

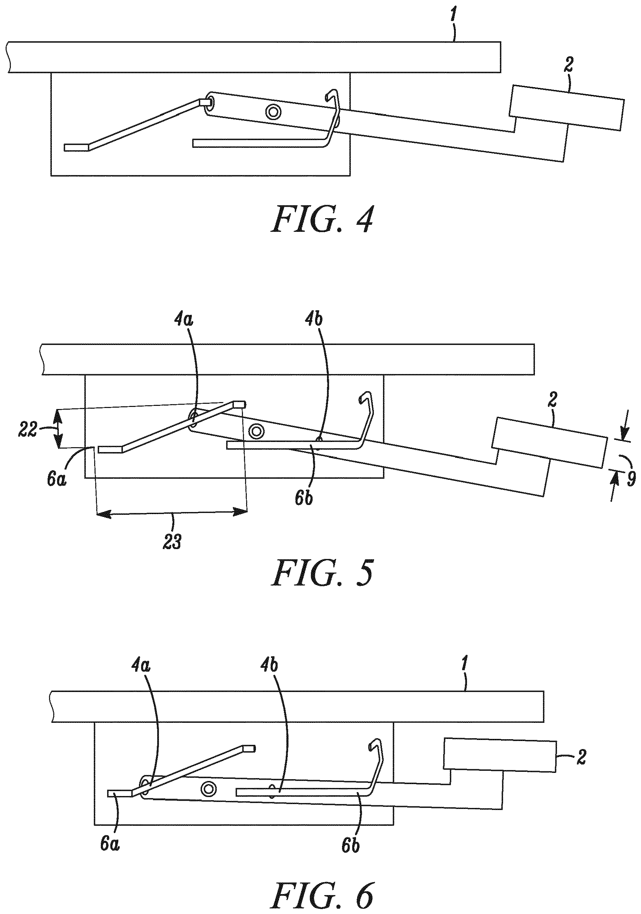

Die Bewegung der Nebenablage 2 setzt sich nach Figur 3 fort, indem durch einen großen Neigungswinkel der äußeren Führungsnut 6b im oberen Teil 15 eine Abwärtsbewegung unterstützt wird, bei der sich im Wesentlichen nur der Führungsstift 4b in der äußeren Führungsnut 6b bewegt, währenddessen der andere Führungsstift 4a nahezu still steht. Die Nebenablage 2 ändert dabei auch ihren Neigungswinkel und kippt mit der Außenseite nach unten. Diese Kippbewegung verstärkt sich kurzzeitig bei der weiteren Bewegung nach Figur 4, bis die Führungsrolle 4b der äußeren Führungsnut 6b in eine waagerechte Bewegung übergeht, siehe Figur 5. Bis zu diesem Punkt hat der Führungsstift 4b eine Höhe 22 zurückgelegt, die die Dicke 9 der Nebenablage 2 leicht übersteigt. Der andere Führungsstift 4a bewegt sich hingegen noch in einer geneigten Führungsnut 6a. Bis zum Moment, indem wie in Figur 6 dargestellt, beide Führungsstifte 4a, 4b in eine waagerechte Bewegung übergehen, verlaufen die Führungsnuten 6a, 6b nicht parallel. Um die Nebenablage 2 vollständig unter der Hauptablage 1 verfahren und die Ablösebewegung ausführen zu können, ist die Länge 23 der Führungsnuten 6a, 6b größer als die Tiefe 9 der Nebenablage 2.

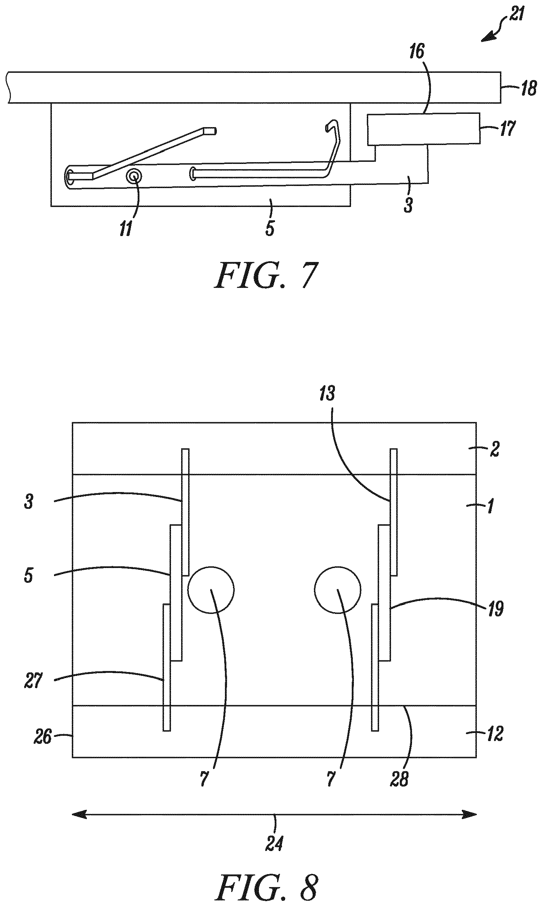

In Figur 6 ist verdeutlicht, dass zum Ende der Bewegung der Nebenablage 2 beide Führungsstifte 4a, 4b in eine parallele, waagerechte Bewegung übergehen und auch die Nebenablage 2 damit parallel unter der Hauptablage 1 bewegt wird. Die Nebenablage 2 erreicht in der Darstellung nach Figur 7 die Startposition 21, in der der Schenkel 3 mit einer zweiten Arretierungsvorrichtung 11 an der Kulissenführung 5 verriegelt werden kann. Die Führungsrollen befinden sich dann jeweils in Anfangslagen der Führungsnuten. Die Nebenablage 2 ist damit in einer verstauten Position, bei der eine Außenkante 17 der Nebenablage 2 in der Nähe einer Außenkante 18 der Hauptablage 1 liegt und einen nahezu bündigen Abschluss mit der Hauptablage 1 bildet. Der Abstand zur Hauptablage 1 ist minimal, so dass eine Oberseite 16 der Nebenablage 2 nahezu an einer Unterseite der Hauptablage 1 anliegt.

Figur 8 zeigt einen größeren Tischaufbau mit Hauptablage 1 und zwei Nebenablagen 2, 12, die an zwei gegenüberliegenden Seiten der Hauptablage 1 angeordnet sind. Der Tisch ruht auf zwei Füßen 7, die den Unterbau des Tisches bilden. Nahe an den Füßen 7 sind zwei Kulissenführungen 5, 19 angeordnet. Auf jeweils gegenüberliegenden Seiten der Kulissenführungen 5, 19 sind Schenkelpaare 3, 13, 27, 28 angeordnet, die über nicht dargestellte Führungsrollen in Führungsnute der Kulissenführungen 5, 19 eingreifen. Wie zuvor darstellt, ist dabei jeder Schenkel 3, 13, 27, 28 über zumindest zwei Führungsnuten geführt. Um die durch das Gewicht der Nebenablagen 2, 12 verursachten Kräfte bestmöglich abzuführen, sind die Kulissenführungen 5, 19 so positioniert, dass der Abstand der Kulissenführung 5 von der nächstliegenden Außenseite 26 ca. ¼ der Breite 24 der Nebenablage 2 beträgt.

In Figur 9 ist der Tisch von der Seite der Nebenablage 2 aus gesehen dargestellt. Zwischen den Füßen 7 ist eine Antriebsvorrichtung 30 angeordnet, die über einen elektrischen Motor die Schenkel 3, 13 in Blickrichtung synchron bewegt, wobei nicht dargestellte Kulissenführungen mit Führungsnuten das zuvor geschilderte Bewegungsprofil vorgeben. Bei mehreren Nebenablagen kann der Motor auch das Schenkelpaar für die zweite Nebenablage antreiben.

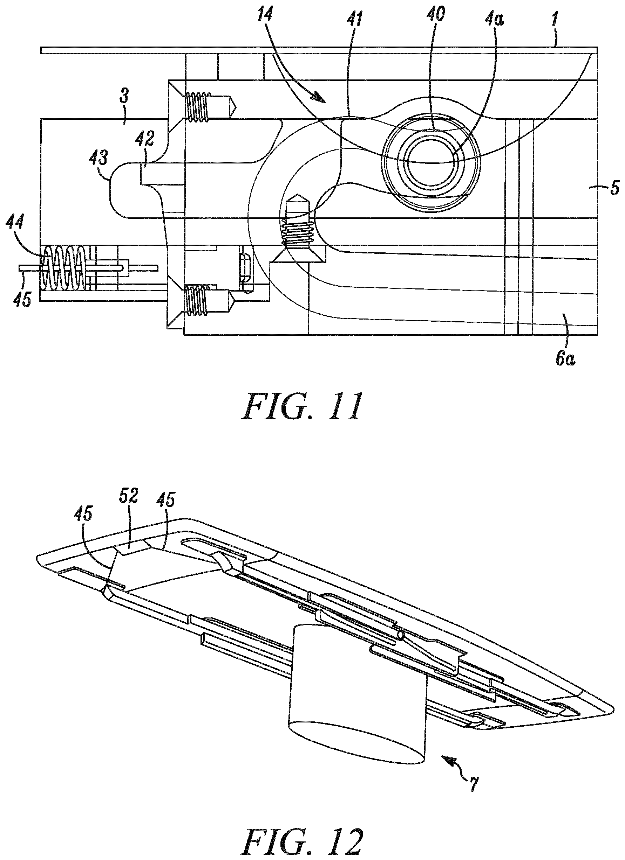

In Figur 11 ist vergrößert die Krümmung 14 einer an einer Außenseite des Tisches gelegenen Führungsnut 6a gezeigt. Die Führungsnut 6a ist Teil einer Kulissenführung 5, die an der Unterseite der Hauptablage 1 befestigt ist. Die Krümmung 14 der Führungsnut 6a krümmt sich von der Nebenablage weg. Dabei überwindet die Krümmung 14 einen Scheitelpunkt 41 bevor ein Endpunkt 40 erreicht wird. Der Scheitelpunkt 41 ist dabei der Hauptablage 1 näher als der Endpunkt 40. Ein Führungsstift 4a ist im Endpunkt 40 dargestellt, der Position, in der die Nebenablage wie später dargestellt verriegelt werden soll. Die Form der Führungsnut 6a zwischen Scheitelpunkt 41 und Endpunkt 40 entspricht dabei der Unterseite der Kante der Hauptablage, die der Nebenablage zugewandt ist.

In Figur 11 ist weiterhin dargestellt, dass im Schenkel 3 eine Ausnehmung 43 vorgesehen ist. In der Arretierungsposition sitzt eine die Ausnehmung 43 umgebende Fläche des Schenkels 3 auf einem Vorsprung 42 auf, der fest mit der Hauptablage 1 verbunden ist, beispielsweise durch Verschraubung einer Stahlnase an der Kulissenführung 5. Am unteren Rand des Schenkels 3 ist eine Feder 44 und ein Bowdenzug 45 befestigt, über die ein später genauer erläuterter Schnappverschluss gesteuert wird.

Figur 12 zeigt einen Tisch mit Unterbau 7 und einem mit zwei Bowdenzügen 45 verbundenen Bedienelement 52. Zwei Nebenablagen sind jeweils durch zwei Schenkelpaare, die beidseitig an jeweils einer Kulissenführung geführt werden, abgestützt.

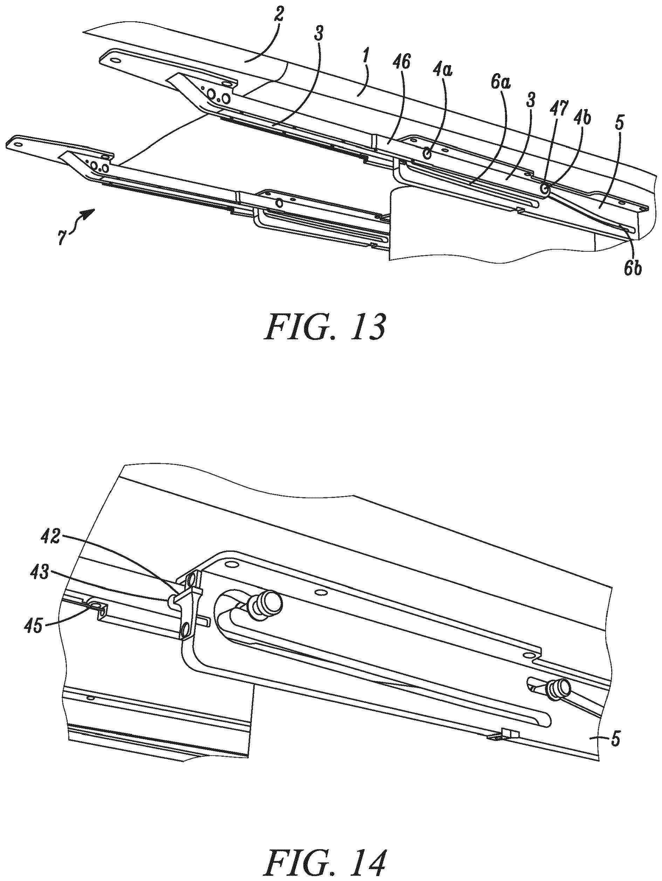

Ein an beiden Seiten der Kulissenführung 5 angeordnetes Schenkelpaar 3 ist in Figur 13 verdeutlicht gezeigt. In der Kulissenführung 5 sind zwei Führungsnute 6a, 6b eingebracht, in denen die Schenkel 3 mittels zweier Führungsstifte 4a, 4b geführt sind. Aufgrund der Länge der Schenkel 3 und der später erläuterten Abstützfunktion, der auch die Auswölbung 47 am Ende des Schenkels 3 dient, ist etwa mittig eine Verstärkung 46 der Schenkel 3 eingebracht, an die auch der Bowdenzug 45 und die Ausnehmung 43 ansetzen. Dies ist besser aus Figur 14 zu entnehmen. An der Stirnseite der Kulissenführung 5 ist eine Stahlnase angeschraubt, die einen Vorsprung 42 aufweist, der seitlich in jeweils eine Ausnehmung 43 der zwei Schenkel 3 hineinragt. Damit kann sich in der Arretierungsposition die Ausnehmung 43 in den Schenkeln 3 auf dem Vorsprung 42 aufstützen. Zusätzlich drückt in dieser Position die in Figur 13 gezeigte Auswölbung 47 des Schenkels von unten gegen die Hauptablage 1. Damit ist ein fester Sitz der Nebenablage in ausgefahrener Position gewährleistet.

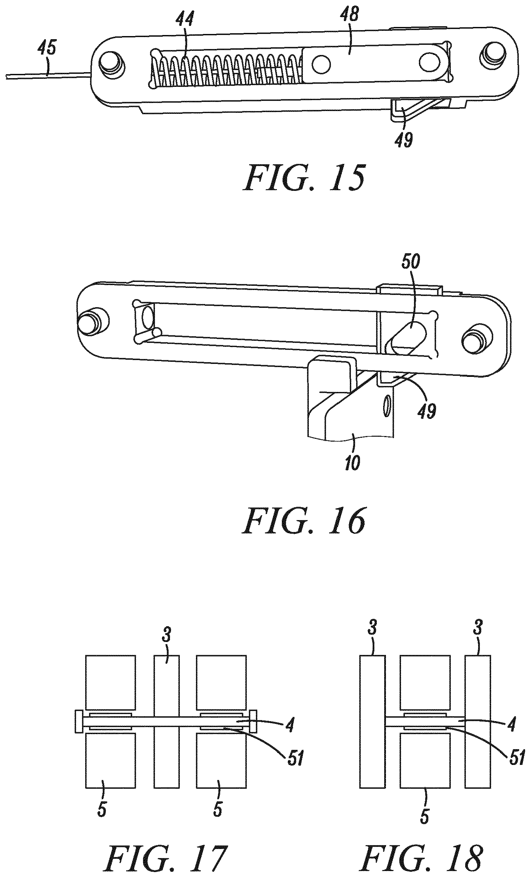

Der Arretierungsmechanismus für die Schenkel wird anhand der Figuren 15 und 16 erläutert. Ein Schlitten 48 ist entgegen einer Einfahrrichtung der Nebenablage durch eine Feder 44 vorgespannt. Der Schlitten 48 ist mit dem Bowdenzug 45 verbunden, der gegen die Kraft der Feder 44 bedient werden muss. Über einen Bolzen 53, der in einem Langloch 50 - siehe Figur 16 - geführt ist, wird der Schlitten 48 mit einem Schnappverschluss 49 verbunden. Der Schnappverschluss 49 ist angeschrägt, so dass er durch eine durch die Feder oder ein Einschieben des Schenkels bedingte Bewegung entgegen der Zugrichtung des Bowdenzugs 45 selbsttätig in eine Verriegelungsposition einschnappen kann. Bei Bedienung des Bowdenzugs 45 wird durch das in einem Winkel von ca. 45°, etwa parallel zur Schräge des Schnappverschlusses 49, angestellte Langloch 50 der Schnappverschluss nach oben gezogen und die Arretierung in einer Ausnehmung 10 aufgehoben. Der Schenkel und die Nebenablage können daraufhin bewegt werden.

In den Figuren 17 und 18 werden zwei alternative Varianten gezeigt, wie die Steifigkeit der Konstruktion erhöht werden kann. Nach Figur 17 ist ein Schenkel 3 in zwei beidseitig angeordneten Kulissenführungen 5 mit jeweiligen Führungsnuten über einen Führungsstift 4 geführt, wobei auf dem Führungsstift 4 im Bereich der Kulissenführungen 5 jeweils ein Gleitelement 51, beispielsweise aus Kunststoff oder eine Gummierung des Führungstiftes 4, der eine Führungsrolle bildet, angebracht ist. Nach Figur 18 sind ein rechter und linker Schenkel 3 über einen Führungsstift 4 verbunden, wobei wiederum der Führungsstift im Bereich der Kulissenführung 5 von einem Gleitelement 51 aus Kunststoff umgeben ist. Die Führung innerhalb der Kulissenführung 5 erfolgt innerhalb der Führungsnut.

### Bezugszeichen

| | |
|---|---|
| Hauptablage | 1 |
| Nebenablage | 2, 12 |
| Schenkel | 3, 13, 27, 28 |
| Führungsstifte | 4, 4a, 4b |
| Kulissenführung | 5, 19 |
| Führungsnuten | 6a, 6b |
| Unterbau | 7 |
| Breite der Nebenablage | 8 |
| Dicke der Nebenablage | 9 |
| Arretierungsvorrichtung, Ausnehmung | 10, 11 |
| Krümmung | 14 |
| oberes Teil der Führungsnut | 15 |
| Oberseite der Nebenablage | 16 |
| Außenseite der Nebenablage | 17 |
| Außenseite der Hauptablage | 18 |
| Endposition | 20 |
| Anfangsposition | 21 |
| Höhenabstand Anfangs- und Endposition | 22 |
| Länge der Führungsnuten | 23 |
| Breite der Nebenablage | 24 |
| Seitenkante der Nebenablage | 26 |
| Antriebseinrichtung | 30 |
| Scharnierstück | 31 |
| Scharnier | 32 |
| Endpunkt | 40 |
| Scheitelpunkt | 41 |
| Vorsprung | 42 |
| Ausnehmung im Schenkel | 43 |
| Feder | 44 |
| Bowdenzug | 45 |
| Versteifung | 46 |
| Auswölbung im Schenkel | 47 |
| Schlitten | 48 |
| Schnappverschluss | 49 |
| Langloch | 50 |
| Gleitelement | 51 |
| Bedienelement | 52 |
| Bolzen | 53 |

## Patentansprüche

1. Tisch mit
einer Hauptablage (1),
einem Unterbau (7),
einer beweglichen Nebenablage (2) mit mindestens einem Schenkel (3) zum Abstützen der Nebenablage, der zwei Führungsstifte (4a, 4b) umfasst, mit einer Kulissenführung (5), die über zwei Führungsnuten (6a, 6b) mit den Führungsstiften (4a, 4b) zur Abstützung der Nebenablage (2) zusammenwirkt,
wobei die Kulissenführung (5) für eine Anfangs- (21) und Endposition (20) Arretierungsvorrichtungen (10, 11) aufweist, in denen der Schenkel (3) der Nebenablage (2) fixiert wird,
**dadurch gekennzeichnet, dass** ein mittels eines Bedienelements (52) betätigbarer Bowdenzug (45) entlang des Schenkels (3) geführt wird, der auf einen Schnappverschluss (49) einwirkt, wobei sich der Schnappverschluss (10) bei Betätigung des Bowdenzugs (45) aus einer Arretierungsposition löst und die Nebenablage (2) bewegbar wird.

2. Tisch nach Anspruch 1, **dadurch gekennzeichnet, dass** die Führungsnuten (6a, 6b) der Kulissenführung (5) an einer der Nebenablage (2) abgewandten Seite waagerecht und parallel zueinander angeordnet sind.

3. Tisch nach einem der vorherigen Ansprüche, **dadurch gekennzeichnet, dass** die der Nebenablage (2) naheliegende Führungsnut (6b) an der der Nebenablage (2) zugewandten Seite eine von der Nebenablage (2) abweisende Krümmung (14) aufweist, wobei ein Endpunkt (40) der Krümmung (14) eine im Vergleich zum Scheitelpunkt (41) größere Entfernung von der Hauptablage (1) aufweist.

4. Tisch nach einem der vorherigen Ansprüche, **dadurch gekennzeichnet, dass** die Führungsnuten (6a, 6b) der Kulissenführung (5) an der der Nebenablage (2) zugewandten Seite nicht parallel sind.

5. Tisch nach einem der vorherigen Ansprüche, **dadurch gekennzeichnet, dass** die der Nebenablage (2) benachbarte Führungsnut (6b) in einem oberen Teil (15) einen größeren Neigungswinkel aufweist als die andere Führungsnut (6a) der Kulissenführung (5).

6. Tisch nach einem der vorherigen Ansprüche, **dadurch gekennzeichnet, dass** Anfangs- (21) und Endposition (20) der Führungsnuten (6a, 6b) einer Kulissenführung (5) jeweils den gleichen Abstand zur Hauptablage (1) und Anfangs- (21) und Endposition (20) zueinander einen Höhenabstand (22) von etwas mehr als einer Dicke (9) der Nebenablage (2) aufweisen.

7. Tisch nach Anspruch 6, **dadurch gekennzeichnet, dass** eine Oberseite (16) der Nebenablage (2) in der Anfangsposition (21) an der Hauptablage (1) nahezu anliegt.

8. Tisch nach Anspruch 6, **dadurch gekennzeichnet, dass** eine Außenseite (17) der Nebenablage (2) in der Anfangsposition (21) in der Nähe einer Außenseite (18) der Hauptablage (1) positioniert ist.

9. Tisch nach einem der vorherigen Ansprüche, **dadurch gekennzeichnet, dass** eine Länge (23) der Führungsnuten (6a, 6b) eine in Richtung des Schenkels (3) ausgerichtete Dimension (8) der Nebenablage (2) übersteigt.

10. Tisch nach einem der vorherigen Ansprüche, mit zumindest zwei die Nebenablage (2) abstützenden Schenkeln (3, 13), die zueinander parallel angeordnet sind und über zwei Kulissenführungen (5, 19) geführt werden.

11. Tisch nach Anspruch 10, **dadurch gekennzeichnet, dass** die Schenkel (3, 13) der Nebenablage (2) etwa ein Viertel einer Breite (24) der Nebenablage von einer jeweilig nächsten Seitenkante (26) der Nebenablage (2) entfernt angeordnet sind.

12. Tisch nach einem der vorherigen Ansprüche, mit einer Antriebseinrichtung (30) zum Verschieben der Nebenablage (2) entlang der Kulissenführung (5).

13. Tisch nach Anspruch 13, **dadurch gekennzeichnet, dass** die Antriebseinrichtung (30) elektrisch betreibbar ist.

14. Tisch nach einem der vorherigen Ansprüche, **dadurch gekennzeichnet, dass** die Kulissenführung (5) aus Aluminium oder einer Titanlegierung gefertigt ist und die Hauptablage (1) und die Nebenablage (2) aus Holz, Stein, Komposite-Material oder einem Material mit belederter Oberfläche bestehen.

15. Tisch nach einem der vorherigen Ansprüche, mit einer zweiten Nebenablage (12), die an einer weiteren Seite der Hauptablage (1) angeordnet ist, wobei zumindest ein Schenkelpaar (3, 27) beider Nebenablagen (2, 12) eine gemeinsame Kulissenführung (5), jedoch mit an unterschiedlichen Seiten der Kulissenführung (5) eingebrachten, separaten Führungsnuten nutzt.

16. Tisch nach Anspruch 3, wobei die Krümmung (14) der Kulissenführung (5) gespiegelt an die untere Kante der der Nebenablage (2) benachbarten Seite der Hauptablage (1) angepasst ist.

17. Tisch nach einem der vorherigen Ansprüche, wobei pro Kulissenführung (5) beidseitig zwei Schenkel (3) geführt werden.

18. Tisch nach einem der Ansprüche 1 bis 18, wobei pro Schenkel (3) zur Führung des Schenkels (3) beidseitig zwei Kulissenführungen (5) vorgesehen sind.

19. Tisch nach einem der vorherigen Ansprüche, wobei Schenkel (3) und Kulissenführung (5) aus Metall, insbesondere Aluminium oder einer Titanlegierung, gefertigt sind.

20. Tisch nach einem der vorherigen Ansprüche, wobei der Bowdenzug (45) durch eine Feder (44), insbesondere eine Spiralfeder, vorgespannt ist.

21. Tisch nach einem der vorherigen Ansprüche, mit zumindest zwei Schenkeln (3) und zugeordneten Kulissenführungen (5), wobei über das, vorzugsweise mittig zwischen den Schenkeln (3) angeordnete, Bedienelement (52) zwei Bowdenzüge (45) betätigt werden, die jeweils einen Schnappverschluss (49) steuern.

22. Tisch nach einem der vorherigen Ansprüche, wobei zwei eine Anfangs- und eine Endposition (20, 21) bezeichnende Ausnehmungen (10, 11) in der Kulissenführung (5) bzw. dem Schenkel (3) vorgesehen sind, in die der Schnappverschluss (49) verrastbar ist.

23. Tisch nach einem der vorherigen Ansprüche, wobei im Schnappverschluss (49) ein Langloch (50) vorgesehen ist, das in einem spitzen, vorzugsweise zwischen 15° und 60°, insbesondere etwa 45°, Winkel von einer Bewegungsachse der Nebenablage (2) absteht, und einem im Langloch (50) geführten Bolzen (53), der in der Arretierungsposition die Bewegung des Schnappverschlusses (49) in eine Ausnehmung (10) steuert.

24. Tisch nach einem der vorherigen Ansprüche, wobei der Schnappverschluss (49) an der vom Bowdenzug (45) abweisenden Seite angeschrägt ist.

25. Tisch nach einem der vorherigen Ansprüche, wobei eine Abstützung der Nebenablage (2) in ausgefahrener Position durch eine Auswölbung (47) im Schenkel (3), die von unten gegen die Hauptablage (1) drückt, und eine Ausnehmung (43) im Schenkel (3), die sich auf einen fest mit der Hauptablage verbundenen Vorsprung (42) abstützt, gewährleistet wird.

26. Tisch nach einem der vorherigen Ansprüche, wobei der Tisch ein Tisch für Luftfahrzeuge ist.

## Claims

1. Table having
a main tabletop (1),
a substructure (7),
a movable auxiliary tabletop (2) with at least one limb (3) for supporting the auxiliary tabletop, said limb comprising two guide pins (4a, 4b), with a slotted guide (5) which interacts with the guide pins (4a, 4b) by way of two guide grooves (6a, 6b) in order to support the auxiliary tabletop (2), wherein the slotted guide (5), for a starting position (21) and end position (20), has locking apparatuses (10, 11) in which the limb (3) of the auxiliary tabletop (2) is fixed,
**characterized in that** a Bowden cable (45) which can be actuated by means of an operator control element (52) and which acts on a snap-action fastener (49) is guided along the limb (3), wherein the snap-action fastener (49), upon actuation of the Bowden cable (45), detaches from a locking position and the auxiliary tabletop (2) becomes movable.

2. Table according to Claim 1, **characterized in that** the guide grooves (6a, 6b) of the slotted guide (5) are arranged horizontally and parallel to one another at a side which faces away from the auxiliary tabletop (2).

3. Table according to either of the preceding claims, **characterized in that** the guide groove (6b) close to the auxiliary tabletop (2) has, at the side which faces the auxiliary tabletop (2), a curvature (14) which turns away from the auxiliary tabletop (2), wherein an end point (40) of the curvature (14) is at a greater spacing from the main tabletop (1) compared with the vertex (41).

4. Table according to one of the preceding claims, **characterized in that** the guide grooves (6a, 6b) of the slotted guide (5) are not parallel at the side which faces the auxiliary tabletop (2).

5. Table according to one of the preceding claims, **characterized in that** the guide groove (6b) adjacent to the auxiliary tabletop (2) has, in an upper part (15), a greater angle of inclination than the other guide groove (6a) of the slotted guide (5).

6. Table according to one of the preceding claims, **characterized in that** starting position (21) and end position (20) of the guide grooves (6a, 6b) of a slotted guide (5) are in each case at the same distance from the main tabletop (1), and starting position (21) and end position (20) have a height distance (22) to one another which is somewhat greater than a thickness (9) of the auxiliary tabletop (2).

7. Table according to Claim 6, **characterized in that**, in the starting position (21), an upper side (16) of the auxiliary tabletop (2) virtually bears against the main tabletop (1).

8. Table according to Claim 6, **characterized in that**, in the starting position (21), an outer side (17) of the auxiliary tabletop (2) is positioned in the vicinity of an outer side (18) of the main tabletop (1) .

9. Table according to one of the preceding claims, **characterized in that** a length (23) of the guide grooves (6a, 6b) exceeds a dimension (8) of the auxiliary tabletop (2), said dimension being oriented in the direction of the limb (3).

10. Table according to one of the preceding claims, having at least two limbs (3, 13) which support the auxiliary tabletop (2), are arranged parallel to one another and are guided by way of two slotted guides (5, 19).

11. Table according to Claim 10, **characterized in that** the limbs (3, 13) of the auxiliary tabletop (2) are arranged at a spacing of approximately a quarter of a width (24) of the auxiliary tabletop from a respectively closest side edge (26) of the auxiliary tabletop (2).

12. Table according to one of the preceding claims, having a drive device (30) for displacing the auxiliary tabletop (2) along the slotted guide (5).

13. Table according to Claim 12, **characterized in that** the drive device (30) can be electrically operated.

14. Table according to one of the preceding claims, **characterized in that** the slotted guide (5) is manufactured from aluminium or a titanium alloy, and the main tabletop (1) and the auxiliary tabletop (2) are composed of wood, stone, composite material or a material with a leather-covered surface.

15. Table according to one of the preceding claims, having a second auxiliary tabletop (12) which is arranged at a further side of the main tabletop (1), wherein at least one pair of limbs (3, 27) of both auxiliary tabletops (2, 12) uses a common slotted guide (5), but with separate guide grooves introduced on different sides of the slotted guide (5) .

16. Table according to Claim 3, wherein the curvature (14) of the slotted guide (5) is adapted in a mirrored manner to the lower edge of that side of the main tabletop (1) which is adjacent to the auxiliary tabletop (2).

17. Table according to one of the preceding claims, wherein each slotted guide (5) has two limbs (3) guided on both sides.

18. Table according to one of Claims 1 to 17, wherein each limb (3) is provided with two slotted guides (5) on both sides for guiding the limb (3).

19. Table according to one of the preceding claims, wherein limb (3) and slotted guide (5) are manufactured from metal, in particular aluminium or a titanium alloy.

20. Table according to one of the preceding claims, wherein the Bowden cable (45) is preloaded by a spring (44), in particular a spiral spring.

21. Table according to one of the preceding claims, having at least two limbs (3) and associated slotted guides (5), wherein two Bowden cables (45), which each control a snap-action fastener (49), are actuated by way of the operator control element (52) which is arranged preferably centrally between the limbs (3).

22. Table according to one of the preceding claims, wherein two cutouts (10, 11) which designate a starting position and an end position (20, 21) are provided in the slotted guide (5) or the limb (3), the snap-action fastener (49) being able to be latched into said cutouts.

23. Table according to one of the preceding claims, wherein, in the snap-action fastener (49), an elongate hole (50) is provided which projects at an acute angle, preferably of between 15° and 60°, in particular approximately 45°, from an axis of movement of the auxiliary tabletop (2), and a bolt (53) is provided which is guided in the elongate hole (50) and which, in the locking position, controls the movement of the snap-action fastener (49) into a cutout (10).

24. Table according to one of the preceding claims, wherein the snap-action fastener (49) is bevelled on the side which is turned away from the Bowden cable (45).

25. Table according to one of the preceding claims, wherein support of the auxiliary tabletop (2) is ensured in an extended position by a bulge (47) in the limb (3), said bulge pressing from below against the main tabletop (1), and a cutout (43) in the limb (3), said cutout being supported on a protrusion (42) which is fixedly connected to the main tabletop.

26. Table according to one of the preceding claims, wherein the table is a table for aircraft.

## Revendications

1. Tablette, comprenant
un appui principal (1),
une sous-structure (7),
un appui secondaire déplaçable (2) comprenant au moins une branche (3) pour supporter l'appui secondaire, laquelle comprend deux goupilles de guidage (4a, 4b), avec un guide à coulisse (5) qui coopère par le biais de deux rainures de guidage (6a, 6b) avec les goupilles de guidage (4a, 4b) pour supporter l'appui secondaire (2),
le guide à coulisse (5) présentant des dispositifs de blocage (10, 11) pour une position initiale (21) et une position finale (20), dans lesquels est fixée la branche (3) de l'appui secondaire (2),
**caractérisée en ce qu'**un câble Bowden (45) pouvant être actionné au moyen d'un élément de commande (52) est guidé le long de la branche (3), lequel agit sur une fermeture par encliquetage (49), la fermeture par encliquetage (49), lors de l'actionnement du câble Bowden (45), sortant d'une position de blocage et l'appui secondaire (2) pouvant être déplacé.

2. Tablette selon la revendication 1, **caractérisée en ce que** les rainures de guidage (6a, 6b) du guide à coulisse (5) sont disposées au niveau d'un côté opposé à l'appui secondaire (2) horizontalement et parallèlement l'une à l'autre.

3. Tablette selon l'une quelconque des revendications précédentes, **caractérisée en ce que** la rainure de guidage (6b) proche de l'appui secondaire (2) présente, au niveau du côté tourné vers l'appui secondaire (2), une courbure (14) détournée de l'appui secondaire (2), un point d'extrémité (40) de la courbure (14) présentant un éloignement de l'appui principal (1) plus important par comparaison avec le sommet (41).

4. Tablette selon l'une quelconque des revendications précédentes, **caractérisée en ce que** les rainures de guidage (6a, 6b) du guide à coulisse (5) ne sont pas parallèles au niveau du côté tourné vers l'appui secondaire (2).

5. Tablette selon l'une quelconque des revendications précédentes, **caractérisée en ce que** la rainure de guidage (6b) adjacente à l'appui secondaire (2) présente, dans une partie supérieure (15), un plus grand angle d'inclinaison que l'autre rainure de guidage (6a) du guide à coulisse (5).

6. Tablette selon l'une quelconque des revendications précédentes, **caractérisée en ce que** la position initiale (21) et la position finale (20) des rainures de guidage (6a, 6b) d'un guide à coulisse (5) présentent à chaque fois le même espacement par rapport à l'appui principal (1) et la position initiale (21) et la position finale (20) présentent l'une par rapport à l'autre un espacement en hauteur (22) un peu plus grand qu'une épaisseur (9) de l'appui secondaire (2).

7. Tablette selon la revendication 6, **caractérisée en ce qu'**un côté supérieur (16) de l'appui secondaire (2) s'applique pratiquement contre l'appui principal (1) dans la position initiale (21).

8. Tablette selon la revendication 6, **caractérisée en ce qu'**un côté extérieur (17) de l'appui secondaire (2) est positionné dans la position initiale (21) à proximité d'un côté extérieur (18) de l'appui principal (1).

9. Tablette selon l'une quelconque des revendications précédentes, **caractérisée en ce qu'**une longueur (23) des rainures de guidage (6a, 6b) dépasse une dimension (8) de l'appui secondaire (2) orientée dans la direction de la branche (3).

10. Tablette selon l'une quelconque des revendications précédentes, comprenant au moins deux branches (3, 13) supportant l'appui secondaire (2), lesquelles sont disposées parallèlement l'une à l'autre et sont guidées par le biais de deux guides à coulisse (5, 19).

11. Tablette selon la revendication 10, **caractérisée en ce que** les branches (3, 13) de l'appui secondaire (2) sont disposées à une distance d'approximativement un quart d'une largeur (24) de l'appui secondaire à partir d'une arête latérale (26) de l'appui secondaire (2) respectivement plus proche.

12. Tablette selon l'une quelconque des revendications précédentes, comprenant un dispositif d'entraînement (30) pour déplacer l'appui secondaire (2) le long du guide à coulisse (5).

13. Tablette selon la revendication 12, **caractérisée en ce que** le dispositif d'entraînement (30) peut être entraîné électriquement.

14. Tablette selon l'une quelconque des revendications précédentes, **caractérisée en ce que** le guide à coulisse (5) est fabriqué en aluminium ou en un alliage de titane et l'appui principal (1) et l'appui secondaire (2) sont constitués de bois, de pierre, de matériaux composites ou d'un matériau ayant une surface revêtue de cuir.

15. Tablette selon l'une quelconque des revendications précédentes, comprenant un deuxième appui secondaire (12) qui est disposé au niveau d'un autre côté de l'appui principal (1), au moins une paire de branches (3, 27) des deux appuis secondaires (2, 12) utilisant un guide à coulisse commun (5), mais avec des rainures de guidage séparées réalisées au niveau de côtés différents du guide à coulisse (5).

16. Tablette selon la revendication 3, dans laquelle la courbure (14) du guide à coulisse (5) est adaptée avec une symétrie miroir à l'arête inférieure du côté de l'appui principal (1) adjacent à l'appui secondaire (2).

17. Tablette selon l'une quelconque des revendications précédentes, dans laquelle deux branches (3) sont guidées des deux côtés pour chaque guide à coulisse (5).

18. Tablette selon l'une quelconque des revendications 1 à 17, dans laquelle deux guides à coulisse (5) sont prévus des deux côtés pour chaque branche (3), en vue de guider la branche (3).

19. Tablette selon l'une quelconque des revendications précédentes, dans laquelle les branches (3) et le guide à coulisse (5) sont fabriqués en métal, en particulier en aluminium ou en un alliage de titane.

20. Tablette selon l'une quelconque des revendications précédentes, dans laquelle le câble Bowden (45) est précontraint par un ressort (44), en particulier un ressort spiral.

21. Tablette selon l'une quelconque des revendications précédentes, comprenant au moins deux branches (3) et des guides à coulisse associés (5), deux câbles Bowden (45) étant actionnés par le biais de l'élément de commande (52) disposé de préférence centralement entre les branches (3), les câbles Bowden commandant chacun une fermeture par encliquetage (49).

22. Tablette selon l'une quelconque des revendications précédentes, dans laquelle deux évidements (10, 11) désignant une position initiale et une position finale (20, 21) sont prévus dans le guide à coulisse (5) ou dans la branche (3), dans lesquels la fermeture par encliquetage (49) peut être encliquetée.

23. Tablette selon l'une quelconque des revendications précédentes, dans laquelle un trou oblong (50) est prévu dans la fermeture par encliquetage (49), lequel fait saillie depuis un axe de déplacement de l'appui secondaire (2) suivant un angle aigu, de préférence compris entre 15° et 60°, en particulier d'approximativement 45°, et un boulon (53) guidé dans le trou oblong (50) est prévu, qui, dans la position de blocage, commande le déplacement de la fermeture par encliquetage (49) dans un évidement (10).

24. Tablette selon l'une quelconque des revendications précédentes, dans laquelle la fermeture par encliquetage (49) est biseautée au niveau du côté opposé au câble Bowden (45).

25. Tablette selon l'une quelconque des revendications précédentes, dans laquelle un support de l'appui secondaire (2) dans la position sortie est assuré par un bombement (47) dans la branche (3) qui presse par le dessous contre l'appui principal (1) et par un évidement (43) dans la branche (3) qui s'appuie sur une saillie (42) connectée fixement à l'appui principal.

26. Tablette selon l'une quelconque des revendications précédentes, la tablette étant une tablette pour aéronefs.
